# EUROPEAN PATENT APPLICATION

(11) **EP 4 527 196 A1**
(43) Date of publication of application: **26.03.2025**
(21) Application number: 23199488.0
(22) Date of filing: 25.09.2023
(51) Int. Cl.: A01N 25/04, A01N 59/06, A01P 21/00, C05D 9/00

(54) **PRIMING METHOD**

(71) Applicant: Lithos Crop Protect GmbH, 4482 Ennsdorf (AT)
(72) Inventor: Wallner, Adolf Dominik, 4482 Ennsdorf (AT); Paumann, Melanie, 4482 Ennsdorf (AT); Fentsyk, Serhiy, 4482 Ennsdorf (AT)
(74) Representative: Schwarz & Partner Patentanwälte GmbH

(57) **Abstract**

The present invention relates to a method of priming a plant against biotic and/or abiotic stress factors comprising the step of treating said plant or parts thereof with an aqueous composition comprising particles comprising at least one zeolite, wherein the particles have a particle size D98 of less than 30 µm and at least 50 wt % of the dry solids of the aqueous composition consist of the at least one zeolite.

## Description

### FIELD OF THE INVENTION

The present invention relates to a method for plant priming and the use thereof.

### BACKGROUND OF THE INVENTION

Climate change is undoubtedly harming agriculture, giving rise to severe changes in different regions around the globe. The concentration of greenhouse gases in the atmosphere (such as carbon dioxide, nitrous oxide, and methane) has rapidly increased in the last century, mainly due to the continuous reversal in the atmosphere of combustion products provided by energy systems that employ, especially fossil fuels. Agricultural ecosystems are important sinks of greenhouse gases by producing and consuming them in biological processes (such as nitrification, denitrification, net photosynthesis, respiration, decomposition, etc.). A direct consequence of this phenomenon is the rise of the planet's average temperature. These effects include alterations in annual rainfall rates, winds, snow, coastal districts, and oceans level. When subjected to environmental stress, plants actively reduce their vegetative growth to save and redistribute resources and thus increase their chance of survival when stress becomes severe. Especially higher diurnal temperatures sway the plant's ecophysiology and phenology by shifting the phenological stages to earlier times, including the ripening phase shifting to warmer periods. These effects influence the composition of crop producing plants like fruit plants by e.g., diminishing total acidity, reducing starch content and unbalancing aroma compounds of crops. Moreover, uncertainty in spatial and temporal precipitation distribution is a notable issue for the water resources of plants, forcing the farmers to continuously face an increasing water demand in recent decades, which lead to an increase in the gap between supply and demand for water.

Thus, the demand for plant protection against environmental adversity requires increased plant protection materials. For example, controlling pests and diseases has favored using sustainable products like zeolites or kaolin. For instance, compositions including kaolin and chabazite-rich zeolite minerals, as disclosed in Valentini et al. (Valentini et al, 2022, BIO Web of Conferences, 44, 01003) are applied on vines at a dose of 3 wt % showing a lowering of the daily maximum grape berries temperature and an improvement of grapes anthocyanins accumulation. Nevertheless, further methods and means are needed to preserve and, in particular, increase resistance against physiological and biochemical changes in plant growth and fruit composition in times of enhanced environmental stresses.

It is, therefore, an object of the present invention to provide a method to increase the resistance of plants to environmental stresses. The increased stress resistance of plants, in particular of crop producing plants, may lead to an increased crop quality and increased harvest.

### SUMMARY OF THE INVENTION

Thus, the present invention relates to a method of priming a plant, preferably a crop producing plant, more preferably a fruit or vegetable, producing plant, against biotic and/or abiotic stress factors comprising the step of treating said plant or parts thereof with an aqueous composition comprising particles comprising at least one zeolite, wherein the particles have a particle size D98 of less than 30 µm and at least 50 wt % of the dry solids of the aqueous composition consist of the at least one zeolite.

It turned surprisingly out that the method of the present invention enhances resistance of plants to changing climate conditions and other stress inducing influences/factors. In particular, plants or parts thereof can be treated with the aqueous composition according to the present invention to improve resistance against biotic and/or abiotic stress factors e.g., heat, radiation, and pests. The aqueous composition of the present invention is particularly characterized in that the composition comprises particles that include at least one zeolite, wherein the particles have a particle size D98 of less than 30 µm. Surprisingly, it has been found that plants treated with said composition exhibit a more reduced biotic and/or abiotic stress level than plants treated with zeolite comprising particles having a size D98 larger than 30 µm. These findings show an unexpected effect of the size of particles including at least one zeolite on environmental stress resistance of plants.

It also turned out that the zeolite content within the aqueous composition influences the efficacy of said composition in reducing the effect of biotic and/or abiotic stress factors on plants. Thus, an aqueous composition whose dry solids consist of/comprise at least 50 wt % of the at least one zeolite further reduces the effect of biotic and/or abiotic stress factors of the plant compared to most compositions in the art that include zeolite of less than 50 wt % (dry weight). It has been found that the interplay between particle size and zeolite content obviously contributes to the protection of plants from biotic and/or abiotic stress factors but also improves the overall (physiological) condition of the treated plant, in particular in regard to the increased biosynthesis of antioxidants like anthocyanins, which also play a role in the coloration of crops. In particular, the quality of crops like fruits and vegetables is improved after the treatment of the plants according to the present invention. The method according to the invention has a positive effect on the taste of the fruits and on the products obtained by such fruits (such as juices, wine, etc.), which are characterized by balanced aroma and a complex and lingering flavour. In vegetables like potatoes or maize the starch content, for instance, can be increased if the respective plants are treated during their growth with the aqueous composition of the present invention.

In addition, the present invention has the advantage that an increased yield and quality of the harvested product can be accomplished and also results in fewer defects in the subsequent processing operations (such as e.g., fermentation of must and wine) in comparison to known methods in the art. Thus, the susceptibility of faults in the further processing and fermentation process is reduced by the method of the present invention.

Surprisingly, the use of the aqueous composition of the present invention helps also preventing the atypical aging of wine. For example, it turned out that priming grapes with an aqueous composition comprising particles comprising at least one zeolite, said particles having a particle size D98 of less than 30 µm and at least 50 wt % of the dry solids of the aqueous composition consist of the at least one zeolite, leads to a significantly reduced or even not tasteable atypical aging flavour.

Another aspect of the present invention relates to the use of a composition as defined above as a plant protecting agent, fertilizer or biostimulant. It has been shown that the use of the aqueous composition is particularly advantageous in order to obtain a natural plant strengthening agent to increase nutrition efficiency, biotic and/or abiotic stress tolerance and/or crop quality traits, plant growth, and yield. It has also been shown that the use of the composition according to the invention leads to a better-preserved aroma and flavour of the fruits in the finished product. For instance, the untypical aging tone in wine - as mentioned above - can be significantly reduced by using the composition according to the invention. Therefore, the inventive composition can also be particularly used in the fields of juice-, must-, and wine production. Ultimately, the marketable quantity and quality of fruit production and processing is increased by using the composition of the present invention.

Yet, another aspect of the present invention relates to a product obtainable by harvesting crops, preferably fruits and/or vegetables, from a plant treated with a method defined herein, wherein in particular such fruits and/or vegetables are optionally fermented.

### BRIEF DESCRIPTION OF THE FIGURES

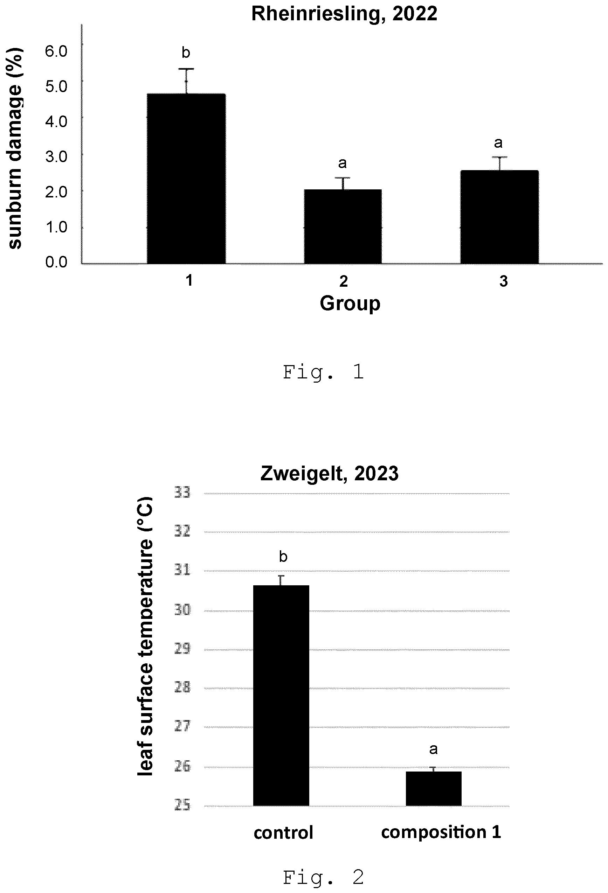

Fig. 1 shows the influence of sun expose to grapevines (Rheinriesling) treated according to the method of the present invention (group 2 and 3) compared to control (group 1) in Lower Austria, 2022, n=50; a=p>0.001; b=p<0.001. Statistical analysis was performed using a Kruskal-Wallis test. The sunburn damage is indicated in %.
Fig. 2 shows the leaf surface temperature of untreated and treated grape leaves (Zweigelt) with the aqueous composition and according to the invention (composition 1; used at 5 kg/ha concentration) under direct sunlight radiation in Lower Austria, 2023. Bars are average of 9 leaves ± standard error, a=p<0.001. Statistical significance among the samples was determined with Student's t-test.

### DETAILED DESCRIPTION OF THE INVENTION

As used herein, the term "priming", refers to a physiological state that enables plants to respond faster and more strongly to abiotic (e.g., drought or heat) or biotic stresses (e.g., infection by pathogens such as fungi).

A "plant" is any plant at any stage of development, preferably a crop producing plant, more preferably a fruit or vegetable producing plant. As used herein, a "crop producing plant", a "fruit producing plant" and a "vegetable producing plant" indicates a plant that is able to produce edible or non-edible crops, fruits or vegetables, respectively.

"Crops", as used herein, include fruits, vegetables, cereals, rice, wheat, maize, sorghum, ragi, pulses, legumes, and nuts. Further, the term "crop" refers also to cotton, sugar-cane, tobacco, groundnut, castor, gingelly, tapioca, etc.

"Fruits", as used herein, mean the fleshy or dry ripened ovary of a flowering plant, enclosing the seed or seeds. Preferably, the fruit producing plant can produce edible sweet- and not sweet-tasting fruits. Sweet tasting fruits can be, but are not limited to, pome fruits, berries, citrus fruits, or tropical fruits.

"Vegetables" include artichoke, cabbage, potato, tomato and zucchini, for instance.

Preferably, the fruit producing plant is a berry bush or a pome fruit tree. In the method of the present invention, when a plant is treated with the aqueous composition, the plant may be an entire plant or part thereof (e.g., stem and leaf, shoot, flower, fruit, panicle, seed, bulb, tuber and root). Also, the plant may be at any of the various stages of growth of the plant e.g., the germination period, including preseeding time, seeding time, and the period before and after the seedling emergence after sowing, the vegetative growth period, including the nursery period, the time of seedling transplantation, the time of planting or nursing cuttings and the growth period after field planting, the reproductive growth period, including the periods before, during and after flowering, immediately before heading or the heading period, and the harvest period, including a period before the expected harvest date, a period before the expected ripening date and the time of initiation of fruit coloration. The seedlings may include cuttings and sugar cane stem cuttings. Stages at which a plant of interest in the present invention can be exposed to biotic and/or abiotic stress factors include all the stages of plant growth, including the germination stage, nursery stage, vegetative growth stage, reproductive growth stage and harvesting stage.

The term "biotic", as used herein, means processes and conditions, occasionally also objects, in which living beings are involved. The opposite is abiotic. Within the context of the present invention, the term "biotic stress factor" designates to stress that occurs as a result of damage done to plants by living organisms, e.g., plant pathogens. The term "pathogens", as used herein, refers to all pathogens of plants in general such as bacteria, viruses, fungi, parasites, or insects. More preferably, the pathogens are fungal, bacterial and/or insect pathogens. Examples of such fungal pathogens include, without limitation, P. infestans, Magnaporthe, Puccinia, Aspergillus, Ustilago, Septoria, Erisyphe, Rhizoctonia, and Fusarium species. Bacterial pathogens can be, without limitation, Xanthomonas, Ralstonia, Erwinia, Pectobacterium, Pantoea, Agrobacterium, Pseudomonas, Burkholderia, Acidovorax, Clavibacter, Streptomyces, Xylella, Spiroplasma, and Phytoplasma species. Insect pathogens can be selected from the group consisting of leaf beetles (Chrysomelidae) like potato beetles, cereal leaf beetle and Japanese beetle, aphids, whiteflies, psyllids, scale insects (Coccoidea), caterpillars of various moths and butterflies (Lepidoptera), vine weevils (Otiorhynchus), thrips (Thysanoptera), leafhoppers and planthoppers (Cicadellidae & Fulgoroidea) and spider mites (Tetranychidae) .

As used herein, the term "abiotic" refers to processes and conditions in which no living beings are involved. Within the context of the present invention, the term "abiotic stress factor", as used herein, refers to stress that occurs as a result of stress done to plants caused by non-living environmental factors such as high- and low-temperature stress, high winds, ultraviolet (UV) radiation stress, excessive heavy metal exposure, and/or drought stress. When plants are exposed to biotic and/or abiotic stress factors, the physiological functions of their cells may be reduced, the physiological conditions of the plants can get worse, and their development may be inhibited.

In particular, "high-temperature stress", as used herein, refers to a stress that plants experience when they are exposed to a temperature exceeding the suitable temperature for their growth or germination. Specifically, the high-temperature stress may be caused under conditions in which the average growth temperature is 25°C or higher, preferably 30°C or higher, preferably 35°C or higher in the environment in which the plants are cultivated.

The term "low-temperature stress", as used herein, refers to a stress that plants experience when they are exposed to a temperature lower than the suitable temperature for their growth or germination. Specifically, the low-temperature stress may be caused under conditions in which the average growth temperature is 15°C or lower, preferably 10°C or lower, preferably 5°C or lower in the environment in which the plants are cultivated.

"UV radiation stress" refers a stress that plants experience when they are exposed to an environment of excessive UV exposure (e.g., sun during open air cultivation) that retards their growth and damages the outer skin of the plant and, in particular, of the fruits. UV light can span from about 100 to 400 nanometers (nm) in the electromagnetic spectrum and can be subdivided into different categories (UVC-, UVB-, and UVA-light). The term "UVC-light", as defined herein, refers to UV-light having a wavelength in the range between 100 and 280 nm. UVC-light has a germicidal effect and can be used for disinfection purposes. Most UVC-light from the sun is absorbed by the Earth's atmosphere, specifically the ozone layer. As used herein, "UVB-light" is characterized as UV-light having a wavelength of 280 to 315 nm. UVC-light can be responsible for causing sunburns and can damage DNA in living organisms. It further plays a role in the production of vitamin D in humans. "UVA-light", as used herein, is defined as UV-light in the range between 315-400 nm. UVA-light can lead to longer-term skin damage and is associated with skin aging. For instance, UVA-light is also used in tanning beds. Excessive UV radiation, in particular UVB-light, can lead to sunburn of the fruits. The severity of the damage depends on the simultaneous occurrence of various factors, such as the weather conditions and stage of development. The formation of protective mechanisms of crops, in particular fruits and vegetables, against damaging UV radiation, such as the production of flavonoids, enzymes, vitamins, or morphological adaptations through a thicker wax layer, requires time and external stimuli. Through suddenly occurring high UV radiation after long periods of dull weather, these protective shields are insufficiently developed. For instance, the early prevention of UV radiation stress and sunburn as root cause for wine faults is essential to be controlled and managed because the prevention in the wine cellar is rather costly.

In particular, UV radiation can be photosynthetically active radiation (PAR). Generally, UV-light is a segment of light that is outside the visible range for humans and has both beneficial and harmful effects on living organisms. The term "photosynthetically active radiation (PAR)", as used herein, refers to the spectral range of solar radiation from 400 to 700 nanometers that photosynthetic organisms, such as plants, are able to use in the process of photosynthesis, falling within the visible spectrum for human. PAR can control the primary production and thus, carbon fixation of terrestrial and marine vegetation and influences energy and water exchange between the vegetation and the atmosphere. The spatial and temporal distribution of PAR can be highly variable during the daytime. The diurnal variation can be influenced by the position of the sun and the atmospheric conditions, i.e., by absorption and scattering processes on atmospheric gases, particles, and clouds. The irradiance or the number or density of photosynthetically active photons can be measured to determine PAR. Measuring methods for determining PAR are known in the art, such as with a spectroradiometer.

The term "drought stress", as used herein, means a stress that plants experience when they are exposed to an environment that retards their growth by preventing water absorption due to a reduction in the water content of the soil caused by a shortage of rainfall or irrigation. Specifically, the drought stress may be caused under conditions in which the water content in the soil in which the plants are grown is 15 wt % or less, preferably 10 wt % or less, preferably 7.5 wt % or less, although these values may vary depending on the type of the soil.

Selection of plants showing an increased resistance against biotic and/or abiotic stress can be done by exposing the plant or parts thereof to biotic and/or abiotic stress factors, determining resistance and comparing it to a control plant.

Within the context of this invention, the term "increased resistance" against biotic and/or abiotic stress factors means a resistance superior to that of a control plant to which the method of the invention has not been applied. The term "increased resistance" also designates a reduced, weakened or prevented manifestation of the disease symptoms provoked by a biotic and/or abiotic stress factor. The symptoms preferably comprise symptoms that directly or indirectly lead to an adverse effect on the quality of the plant or parts thereof, the quantity of the yield, its use for feeding, sowing, growing, harvesting, etc. Such symptoms include, for example, infection and lesion of a plant or of a part thereof (e.g., different tissues, leaves, flowers, fruits, grapes, seeds, roots, shoots), development of pustules and spore beds on the surface of the infected tissue, maceration of the tissue, accumulation of mycotoxins, necroses of the tissue, sporulating lesions of the tissue, colored spots,pigments in the fruit skin as well as alterations of the composition of the fruits (e.g. brix content, pH-value, aroma components, etc.).

Preferably, according to the present invention, the symptoms are reduced by at least 5%, preferably by at least, preferably by at least 10%, preferably by at least 15%, preferably by at least 20%, preferably by at least 30%, preferably by at least 40%, preferably by at least 50%, preferably by at least 60%, preferably by at least 70%, preferably by at least 80%, preferably by at least 90% or more, in comparison with a control plant. The term "increased resistance" of a plant to biotic and/or abiotic stress factors also designates a reduced susceptibility of the plant towards biotic and/or abiotic stress or lack of such susceptibility.

Biotic and/or abiotic stress factors can be determined by known methods in the art that relate to photosynthesis (as e.g., chlorophyll content, chlorophyll fluorescence, gas exchange) or water use. In particular, the reduction of the biotic and/or abiotic stress factors in plants can be indicated by a change in at least one plant phenotype selected from the group consisting of seedling establishment rate, leaf mortality rate, plant length, plant weight, leaf area, leaf color, number or weight of seeds or fruits, quality of harvested products, rates of flower setting, fruit setting, seed setting and seed filling, chlorophyll content, chlorophyll fluorescence yield, water content, leaf or fruit surface temperature, and transpiration capacity. For instance, the chlorophyll content of leaves provides valuable information about the physiological status of plants. Chlorophyll is an essential photosynthetic pigment to the plant that determines photosynthetic capacity and plant growth. The amount of chlorophyll in leaves can be affected by nutrient availability and environmental stresses such as drought, cold and heat. Deficiencies in nutrients can manifest as a decrease in leaf chlorophyll content. A depletion in leaf chlorophyll content reduces the quantity of radiation that will be absorbed. This successively limits the efficiency of corresponding photosynthetic processes, thus lowering primary photosynthetic production. Hence, chlorophyll content can be an important indicator of the physical state of the plant. Furthermore, chlorophyll content of plants can determine fruit color and appearance, representing crucial commercial quality markers. It known in the art that sun burn of fruits and/or leaves can correlate with a low chlorophyll content and, thus, an increase of necrosis and browning of the fruits and/or leaves.

The term "phenotype", as used herein, refers to the observable characteristics of a plant as a multifactorial consequence of genetic traits and environmental influences. The plants' phenotype includes its morphological, biochemical, physiological, and behavioral properties.

The seedling establishment rate can be examined by applying temperature stress on sown seeds during the entire or a partial cultivation period and then the ratio of surviving seedlings can be examined. The number (or rate) of healthy leaves can be counted for each plant, and the total number of the healthy leaves can be examined. Alternatively, the ratio of the number of healthy leaves to the number of all leaves of the plants can be examined.

Also, the plant length from the base of the stem in the aerial part to the tip of the branches and leaves can be measured.

The plant weight can be determined by cutting the above-ground part of each of the plants and weighed to determine the fresh weight. Alternatively, the cut sample can be dried and weighed to determine the dry weight.

Leaf area can be analyzed by photographing plants with a digital camera and the green area in the photograph is quantified using an image analysis software, such as Win ROOF or ImageJ, to obtain the leaf area of the plants. A particularly preferred system to measure the leaf are of plants is LI-3100C (LI-COR Biosciences Inc., USA).

Leaf color can be measured after the leaves of plants are sampled, and the chlorophyll content is measured using a chlorophyll gauge to determine the leaf color. The plants can be photographed with a digital camera and the green area in the photograph can be quantified by color extraction using image analysis software, such as Win ROOF or ImageJ, to obtain the green area of the plants.

The number or weight of crops, e.g., seeds, fruits or vegetables, can be measured by counting the number of seeds, fruits or vegetables per plant after the plants are grown until they reach ripening of seeds, fruits or vegetables or the total weight of seeds, fruits or vegetables per plant is measured. Alternatively, a yield component, such as panicle number, percentage of ripened grains or thousand kernel weight, is examined after plants are grown until they bear ripe seeds.

The quality of harvested products can be determined by measuring the e.g., sugar content of the fully matured fruits using a saccharimeter (refractometer), for example, after the plants are grown until they reach ripening of seeds or fruits. The quality of harvested cereals and potatoes can be measured by determining the starch content of these crops.

Also, the quality of harvested and/or processed products can be evaluated by determining the protein and lipid content or the presence of phenols such as anthocyanins by performing component analysis such as high-performance liquid chromatography (HPLC) or gas chromatograph (GC), etc. Furthermore, alcohol concentration, total acidity and pH can be measured to evaluate the quality of the harvested and/or processed product. For instance, also color intensity of the product and color hue can be determined by spectrophotometric techniques, which are known in the art. Furthermore, the quality of harvested and/or processed products can be assessed by sensory analysis, such as a triangle test and/or quantitative descriptive analysis.

The percentages of flower setting, fruit setting, seed setting and seed filling can be assessed by counting the numbers of set flowers and set seeds and to calculate the percentage of seed setting ((Number of set seeds/Number of set flowers) x 100) after the plants are grown until they reach fructification. After seeds are ripe, the numbers of set seeds and filled seeds are counted to calculate the percentages of seed setting ((Number of set seeds/Number of set flowers) x 100) and seed filling ((Number of filled seeds/Number of set seeds) x 100).

The chlorophyll fluorescence yield can be determined by measuring the chlorophyll fluorescence (Fv/Fm) of the plants by using a pulse modulation chlorophyll fluorometer.

The water content can be examined by determining the fresh and dry weights of the plants, as described above for dry plants, at each developmental stage of plants. The value obtained by subtracting the dry weight from the fresh weight can be regarded as the water content of the plants. Also, the water content of plants can be determined in a nondestructive manner, by near infrared irradiation and measuring the absorption(transmission) at this specific wavelength.

The leaf or fruit surface temperature can be monitored using thermography at each developmental stage of plants. Transpiration capacity can be analyzed by measuring using a porometer at each developmental stage of plants.

In particular, biotic stress factors can be further assessed by monitoring pathogen growth on plants as well as quantifying host-pathogen interactions. Biotic stress can be quantified through expression analyses of defense-marker genes by qRT-PCR, microarrays, RNA sequencing and proteomics as tools to identify altered pathways in response to pathogen infection. Furthermore, the analysis of differential accumulation of phytohormones such as salicylic acid, methyl jasmonate, abscisic acid or ethylene, or of plant metabolites upon infection can be measured by known methods in the art. Several techniques routinely can be used in plant pathology to quantitatively, or semiquantitatively measure biotic stress in plants. These include detection and quantification of reactive oxygen species (ROS) molecules such as hydrogen peroxide (H₂O₂) by luminol-based assays, or superoxide(O₂⁻) by nitroblue tetrazolium (NBT) staining.

Preferably, the reduction of the biotic and/or abiotic stress factors in plants can be indicated by a change in at least one of the plant genotypes. The term "genotype", as used herein, refers to the genetic makeup of an individual plant or parts thereof that determines or contributes to its phenotype. The genotype identifies the alleles related to a single trait or to a number of traits. Methods to identify plant genotype are known to the skilled person in the art, such as polymerase chain reaction (PCR)-based methods, next generation sequencing, whole genome sequencing, DNA hybridization Assays (e.g., Southern Blot, DNA Microarrays), protein-based methods (e.g., ELISA, mass spectrometry (MS)), or metabolite-based methods (GC-MS, LC-MS, nuclear magnetic resonance).

In particular, the aqueous composition of the present invention comprises particles comprising at least one zeolite. The term "zeolite", as used herein, refers to crystalline aluminosilicates that occur in numerous modifications in nature, but can also be produced synthetically. Natural zeolites are hydrated aluminosilicates compounds with a characteristic three-dimensional structure of tetrahedrons as TO₄ (wherein T = Si, Al, B, Ge, Fe, P, and Co). The natural zeolites are mineralogically summarized under the term "zeolite group". Preferably the at least one zeolite is a natural zeolite. The at least one zeolite according to the invention may have beneficial effects on the treated plant to its crystalline structure, the high cation exchange capacity, and the ability to retain water.

The particles of the aqueous composition according to the invention are characterized by having a particle size D98 of less than 30 µm. The term "particle size", as used herein, can be identified via particle size distribution. Particle size distribution may be determined using a variety of techniques. For the purpose of this invention the particle size is determined for the suspension using a laser diffraction system. The D98 value is determined from the particle size distribution from a volume-based representation or from a number-based representation. In the present application, all "dx" values refer to the volume-based representation, i.e. the particle diameter at "x" vol % in the cumulative distribution (e.g. a D98 of 30 µm means that 98 vol % of the particles have a smaller diameter than 30 µm). The D50 value according to the invention is to be understood as the "average particle size" and is determined from the particle size distribution. For example, a D50 of 5 µm means that 50 vol % of the particles have a smaller diameter than 5 µm. The particle size distribution can be determined by laser diffraction analysis in accordance with ISO 13320 or CIPAC MT 187 using for instance CILAS 715 particle size analyzer. In particular, the particle size distribution of particles having a diameter less than 30 µm can be measured by laser diffraction analysis following ISO 13320 using CILAS 715 particle size analyzer.

According to a preferred embodiment of the present invention, the particles have an average size D98 from 0.1 to 25 µm, preferably from 0.2 to 20 µm, more preferably from 0.2 to 15 µm, more preferably from 0.5 to 12 µm, more preferably from 1 to 10 µm, more preferably from 2 to 8 µm. It turned out that the particle size of the at least one zeolite influences the reduction of the biotic and/or abiotic stress factors of plants and parts thereof.

According to another preferred embodiment of the present invention, the particles have an average size D50 of less than 5 µm, preferably from 0.1 to 5 µm, more preferably from 0.5 to 5 µm, more preferably from 1 to 5 µm, more preferably from 1 to 4 µm.. Surprisingly, it has been found that the particle size in the aqueous composition influences the decrease of biotic and/or abiotic stress factors in plants.

The concentration of the particles in the aqueous composition can be measured known methods in the art by weighing the total weight of the aqueous composition with particles and weighing the dry matter of the composition after drying. According to another preferred embodiment of the present invention the aqueous composition comprises 0.1 to 20 wt %, preferably 0.2 to 15 wt %, more preferably 0.5 to 10 wt %, more preferably 2 to 8 wt %, of said particles.

According to another preferred embodiment of the present invention the aqueous composition comprises 0.1 to 10 wt %, preferably 0.1 to 8 wt %, more preferably 0.1 to 5 wt %, more preferably 0.5 to 5 wt %, more preferably 1 to 5 wt %, of said particles having a preferred size of 30 to 100 pm, preferably of 30 to 70 µm. The aqueous composition can comprise a defined number of particles having a preferred maximum size. The percentage of said particles can be determined by a sieve test. To do so, the aqueous composition can be dried. Then, the dried composition is applied to sieves with mesh sizes of 32 µm and 63 pm, for instance, and sieved for some minutes (e.g. 4 to 9 minutes using an alpine air jet sieve, for instance. The sieve residue is weighed and expressed as a percentage (%) of the initial weight. According to another preferred embodiment of the present invention not more than 1 wt%, preferably not more than 0.1 wt%, of the particles have a size of more than 32 µm. According to another further preferred embodiment of the present invention not more than 0.2 wt%, preferably not more than 0.1 wt%, preferably not more than 0.03 wt%, of said particles have a size of more than 63 µm. According to another preferred embodiment of the present invention the particles have a maximum size of 90 pm, more preferably of 65 µm.

The aqueous composition of the present invention can be prepared by mixing water with the dry solids, as described herein, in appropriate quantities. Preferably, the aqueous composition according to the invention is further characterized, wherein at least 50 wt % of the dry solids of the aqueous composition consist of the at least one zeolite. As used herein, the term "dry solid" refers to the total dry matter content of the aqueous composition of the present invention. Dry solids may include, for instance, lime, minerals, heavy metals, etc., in the aqueous composition. The dry solid concentration is commonly expressed as weight percent of the dry solids in the liquid phase. The weight ratio of the at least one zeolite in the dry solid and in the particles can be determined by X-ray diffraction (XRD).

According to another preferred embodiment of the present invention at least 60 wt %, preferably at least 70 wt %, more preferably at least 80 wt %, of the dry solids of the aqueous composition consist of the at least one zeolite. According to a preferred embodiment of the present invention the particles according to the present invention are able to increase the pH on the plants. The pH increasing properties of the particles of the present invention can be determined by suspending the particles in distilled or deionized water or in a MES/TRIS buffer (containing 50 mM KCl and 10 mM MES-Tris (pH 6.15)) to prepare a 1 to 5 wt% suspension, preferably a 1 or 2.5 wt % suspension, of which the pH can be determined. The measurement of the pH of aqueous suspensions is well known in the art and can be done by e.g., a pH-Meter (F20, Mettler Toledo). Distilled or deionized water containing the particles according to the present invention ranges preferably from pH 9 to 10.

It was found that it is advantageous to use particles able to increase the pH of an aqueous solution and in particular of the aqueous composition of the present invention (see below). Such particles increase the pH of the suspension and may alter the proton concentration in the solution, making the suspension more alkaline. It was also found that the particles size might contribute to the increase of the pH of the suspension. This observation can be indicated by a linear increase of the pH with smaller particle sizes. It turned out that particles having a particle size D98 of less than 30 µm show excellent pH increasing properties due to an increased surface of the particles.

The aqueous composition might lead to an increased pH on the primed plant or parts thereof. In particular, an alkaline pH on the leaf surface might result to e.g., a priming effect and positive effects on the stress management of the plant. It is known in the art that higher pH values promote the opening of the plant's stomata. The "stomata", as used herein, are small openings located on the leaf of plants. The ion flow in the stomata is regulated by guard cells (cells surrounding and controlling the stomatapore). In particular, the uptake of cations such as K⁺, Ca⁺ or Na⁺ into the guard cells is a critical step in the opening of the stomata. An alkaline pH (or a pH of more than 7, preferably more than 7.5) could affect various ion transporters and lead to an influx of K⁺ into the guard cells, causing them to swell and the stomata to open. Guard cells also use proton pumps to actively transport protons (H⁺) out of the cell, leading to an influx of other positive ions. The interplay of these ion movements and their relationship to pH might play a role in regulating stomata, and the stomata conductance. Particularly, the stomata allow carbon dioxide (CO₂) to enter the plant for photosynthesis and release oxygen, which is a product of photosynthesis. Stomatal conductance measures how fast gases flow through the stomata, depending on the widths of the openings of the stomata. The wider they are open, the faster the gas exchange. This can lead to an increased photosynthetic rate. Preferably, the aqueous composition according of the present invention having an alkaline pH might lead to an increased pH of the plant or parts thereof, resulting in a change of stomatal conductance and, consequently, reducing abiotic and/or biotic stress in the plant on various levels.

Furthermore, the aqueous composition according to the present invention may promote the opening of the stomata, leading to an influx of cations that further reduce abiotic and/or biotic stress in the plant. In the short term, change of stomatal conductance might promote CO₂ uptake and photosynthesis as well as reactive oxygen species (ROS) production which could activate useful defense mechanisms. Furthermore, an altered ion balance could improve nutrient uptake. From a long-term perspective, the overall growth and yield of the plant might be improved due to increased photosynthetic rates, wherein a sustained priming effect could lead to better overall stress resistance and beneficial effects on the leaf microbiome.

It is also known in the art that zeolites can be categorized in relation to the Si/Al ratio. The physical and chemical properties of zeolites vary by the proportion of the silica to alumina ratio. Conventional methods for characterizing mineralogical compositions of zeolites are known in the art and include X-ray diffraction (XRD), infrared (IR), UV-vis spectroscopy, Raman spectroscopy and nuclear magnetic resonance (NMR). For instance, a low ratio causes a surface of zeolite to be hydrophilic, while a high ratio causes the surface to be hydrophobic (Chen et al., 1976, The Journal of Physical Chemistry, 80, 1, 60-64). According to a further preferred embodiment of the present invention the at least one zeolite has a silica to alumina ratio of at least 4. It has been found that a silica to alumina ratio of at least 4 of the at least one zeolite may contribute to a reduction of the biotic and/or abiotic stress factors.

According to another preferred embodiment of the present invention the at least one zeolite has a silica to alumina ratio of 4 to 10, preferably 4 to 8, more preferably of 4 to 6, more preferably of 4.25 to 5.75.

To improve their catalytic properties, ion-exchange capacity of zeolites can be improved. The "cation exchange capacity (CEC)", as used herein, is defined as the amount of positive charge that can be exchanged per mass of soil and is usually expressed in milligram equivalent (meq) of cations per 100 g of dry soil (1 meq = atomic weight). Cation-exchange capacity can be measured by displacing all the bound cations with a concentrated solution of another cation and then measuring either the displaced cations or the amount of added cation that is retained. Sodium (Na⁺), potassium (K⁺), calcium (Ca²⁺) or magnesium (Mg²⁺) are frequently used as exchanger cations, although many other methods are available. According to another preferred embodiment of the present invention the at least one zeolite has cation exchange capacity (CEC) ranging from 0.5 to 3.5 meq/g, preferably from 0.5 to 3 meq/g, more preferably from 0.5 to 2.8 meq/g, more preferably from 0.5 to 2 meq/g, more preferably from 1 to 1.8 meq/g. It has been turned out that the cation exchange capacity of the least one zeolite significantly contributes to the adsorption of biotic and/or abiotic stress inducing heavy metal cations.

According to another preferred embodiment of the present invention the at least one zeolite is selected from the group consisting of clinoptilolites and mordenite. Clinoptilolite is a natural zeolite composed of a microporous arrangement of silica and alumina tetrahedra. It commonly occurs as a devitrification product of volcanic glass shards in tuff and as vesicle fillings in basalts, andesites and rhyolites. Surprisingly, it has been found out that clinoptilolite shows particularly advantageous effects on the reduction of biotic and/or abiotic stress factor after treatment of plants or parts thereof. For instance, less drought stress of the vine due to clinoptilolite has been observed. Clinoptilolite is particularly preferred to increase the pH of the aqueous composition, which might further lead to reduced abiotic and/or biotic stress in the plant. It also turned out that clinoptilolite can enhance the chlorophyll content in plant leaves and promotes the photosynthetic efficiency of plants. Furthermore, clinoptilolite shows particularly good results in terms of leaf chlorophyll content in comparison to chabazite.

According to a further preferred embodiment of the present invention the clinoptilolite is clinoptilolite-Ca, clinoptilolite-K or clinoptilolite-Na.

According to another preferred embodiment of the present invention the particles comprise at least two, preferably at least three, zeolites.

In particular, a content of more than 50 wt % of the at least one zeolite is preferred, so that as few natural impurities as possible (e.g., heavy metals) are contained in the particles since impurities can act as biotic and/or abiotic damaging factors triggering plant stress. The amounts of heavy metals can be determined, for instance, according to EN 16319:2013+A1:2015, by using inductively coupled plasma atomic emission spectroscopy (ICP-AES) or inductively coupled plasma optical emission spectrometry (ICP-OES). Preferably, these heavy metals include Hg, Pb, Ag, Cu, Cd, Cr, Zn, Ni, Co and Mn. According to another preferred embodiment of the present invention the particles comprise at least 40 wt %, preferably at least 50 wt %, more preferably at least 60 wt %, of the at least one zeolite, preferably 40 to 95 wt %, more preferably 50 to 90 wt %, more preferably 60 to 90 wt %, of the at least one zeolite.

According to another preferred embodiment of the present invention the particles comprise further calcite, a mica, a clay mineral, quartz, a feldspar or a combination thereof, preferably in an amount from 0.1 to 30 wt %, preferably from 0.1 to 20 wt %, preferably from 0.5 to 10 wt %.

Preferably, the particles can comprise at least one further zeolite. The least one further zeolite may differ in structure and composition from the at least one zeolite, as described above. Alternatively, the aqueous composition can comprise further particles comprising at least one further zeolite, preferably having a silica to alumina ratio of 4 or less. By combining the particles comprising the at least one zeolite and the at least one further zeolite or by combining particles including the at least one zeolite with the further particles comprising the least one further zeolite, an enhanced effect on biotic and/or abiotic stress can be achieved. According to another preferred embodiment of the present invention the particles comprise at least one further zeolite or wherein the aqueous composition comprises further particles comprising at least one further zeolite preferably having a silica to alumina ratio of 4 or less.

According to a further preferred embodiment the at least one further zeolite is selected from the group consisting of heulandite and chabazite.

According to another preferred embodiment of the present invention the aqueous composition is applied to said plant or parts thereof by spraying, watering and/or dusting, wherein different types of nozzles and heat energy type can be used.

According to a further preferred embodiment of the present invention the aqueous composition is applied to said plant or parts thereof using slide pump sprayers, hand sprayers, stirrup pump sprayers, compression sprayers, foot operated sprayers, rocker sprayers, knapsack sprayers, high pressure power sprayers, aerosol sprayers, tractor/ vehicle mounted sprayers, and/or aircraft sprayers.

In order to identify the phenological development stages of plants, the BBCH-scale is used. BBCH-scales have been developed for a range of crop species where similar growth stages of each plant are given the same code. Plant phenological development stages are used in several scientific disciplines (crop physiology, phytopathology, entomology and plant breeding) and in the agriculture industry (risk assessment of pesticides, timing of pesticide application, fertilization, agricultural insurance). The BBCH-scale uses a decimal code system, which is divided into principal and secondary growth stages. Each code has a description and important growth stages have additional drawings included. The first digit of the scale refers to the principal growth stage, wherein the second digit refers to the secondary growth stage, which corresponds to an ordinal number or percentage value. For instance, post-harvest or storage treatment is coded as 99, and seed treatment before planting is coded as 00 (see Meier, Uwe: Growth stages of mono- and dicotyledonous plants 1997. Blackwell; Meier, Uwe: BBCH Monografie, DOI: 10.5073/20180906-075119). According to another preferred embodiment of the present invention the aqueous composition is applied to said plant or parts thereof by spraying, preferably at stages 00 to 99 on the BBCH scale, more preferably at stages 00 to 89 on the BBCH scale, more preferably at stages 09 to 89 on the BBCH scale, more preferably at stages 75 to 89 on the BBCH scale.

According to another preferred embodiment of the present invention the aqueous composition is applied to said plant or parts thereof 1 to 20, preferably 1 to 15, more preferably 1 to 10, times in a season, preferably with from 1 week to 8 weeks, more preferably 1 to 6 weeks, more preferably 1 to 4 weeks, between treatments.

According to another preferred embodiment of the present invention the aqueous composition is applied to said plant or parts thereof at a dose rate of from 10 to 1000 litres per hectare, preferably from 20 to 500 litres per hectare, preferably from 50 to 100 litres per hectare, whereby the aqueous composition comprises 0.1 to 20 wt% of said particles.

According to another preferred embodiment of the present invention the plant is a crop producing plant, preferably a fruit or vegetable producing plant, more preferably selected from the group consisting of a berry bush, a pome fruit tree and potato plant.

According to another preferred embodiment of the present invention the berry bush is grapevine. Grapevines are affected by several biotic and/or abiotic stress factors that lead to physiological and biochemical changes in plant growth and crop composition. In particular, abiotic stress factors such as e.g., heat waves may induce faster depletion of organic acid, high pH, and atypical aroma compounds. For instance, 2-Amino-acetophenone (AAP) is known as the character impact compound responsible for the so-called untypical "aging off-flavor" (UTA) in grapevines. The formation of AAP is caused by an oxidative degradation of the phytohormone indole-3-acetic acid (IAA), triggered by sulfuration after fermentation. UTA is an off-flavour characterized by rapid loss of fruity aromas and the development of unpleasant odours. To prevent UTA, wines must be immediately sulfurized and treated with ascorbic acid, which does not solve the problem but shifts them to the consumer. It has been found that biotic and/or abiotic stress factors on grapevines can be reduced by the present invention, which consequently results in a decrease of UTA. Therefore, the resulting wines, must, or juices are less susceptible to aging, loss of color, and altered aromatic profiles. This has a positive effect on the taste of the grapes and the terroir of the wines supporting the complexity of the wine. The method of the present invention also strengthens the resistance of the plant to diseases such as the sour rot of the grapes caused by various species of botrytis, powdery mildew, and fruit flies, whose proliferation can damage the product by forming a greyish, physical coating on grapes and leaves. Another advantage of the present invention, especially for wine-makers and consumers, including the gastronomy, is that the untypical aging tone in the wine is reduced and a high amount of ascorbic acid and free sulfur could be saved worldwide, which has a positive effect on sustainable production. Therefore, the use of sulfur or ascorbic acid can be reduced or even prevented by the method according to the present invention.

According to another preferred embodiment of the present invention the pome fruit tree is selected from the group consisting of apple tree, pear tree, quince tree, loquat tree and medlar tree.

After harvesting fruits or vegetables from a plant treated with the method defined herein, a product can be obtained, wherein the fruits or vegetables can be optionally fermented. The fermentation of fruits or vegetables are known in the art. Preferably, the obtained product can be juice, wine, must, a sauce, tofu and/or bread.

### EXAMPLES

### Example 1:

An aqueous composition was prepared comprising 4 kg clinoptilolite particles with a particle size D98 of 10 µm and 300 l water. At least 50 wt % of the dry solids of the aqueous composition consisted of the clinoptilolite (composition 1). To assess the resistance of the grapes to sunburn, vines of wine grapes (Rheinriesling) were subdivided into three groups and exposed to different treatments with the aqueous composition:
*Group 1*: Untreated control.
*Group 2*: 2-time application of 4 kg particles/ha (4 kg particles in 300 l water) starting at stage 77 on the BBCH scale. The time interval between applications was 21 days.
*Group 3*: 3-time application of 4 kg particles/ha (4 kg in 300 l water) starting at stage 77 on the BBCH scale. Time interval between applications was 14 days.

The experiment was performed in Lower Austria between June and September 2022 by Höhere Bundeslehranstalt und Bundesamt für Wein- und Obstbau Klosterneuburg. The degree of sunburn of the leaves and the grapes was assessed in % after 78 days after the first treatment and an average value was determined The degree of sunburn of grapes was determined as described by Hill et al. (2010, New Zealand Plant Protection, 63, 174-181, doi:1030843inom.2010.63.6560). The degree of sunburn of leaves were measured according to EPPO Standard PP 1/152(4).

The results in Fig. 1 show a significant difference between control and the treated grapevines (groups 2 and 3), exhibiting a clear protective influence of the method of the present invention on sunburn of grapes. No significant difference was found between group 2 and group 3 (see Fig. 1).

### Example 2:

As defined in Example 1, the aqueous composition (composition 1) was also applied to three grape varieties (Riesling, Pinot Blanc, and Rheinriesling) in three locations (A, B, C). The grapes were treated 3-times with 4 kg particles/ha (4 kg in 300 l water) of the aqueous composition, as described in Example 1. To determine the effects of the method according to the present invention in abiotic stress factors, plant leaves were analyzed after one week of application. The sugar content of the plant leaves was measured by using a refractometer. To determine pH and electrical conductivity (EC), leaves were crushed and suspended in an aqueous solution to prepare a 1 wt% suspension. The measurement of the pH and EC of aqueous suspensions is well known in the art and was performed by using a pH-Meter and an EC-Meter. The amounts of trace elements were measured by ICP-AES according to according to EN 16319:2013+A1:2015.

**Table 1: Overview of the results**

| **Trial location** | | **A** | | **B** | | **C** | |
|---|---|---|---|---|---|---|---|
| **Grape variety** | | Riesling | | Pinot Blanc | | Rheinriesling | |
| **Variant** | | Control | Compostion 1 | Control | Compostion 1 | Control | Compostion 1 |
| **Paramater** | **Unit** | | | | | | |
| sugar | % | 2.4 | 3.2 | 3.2 | 3.7 | 1.9 | 2.5 |
| pH | | 3.6 | 3.8 | 3.5 | 3.6 | 3.9 | 4.1 |
| EC | mS/cm | 7.2 | 7.3 | 9.2 | 9.3 | 7.4 | 8 |
| K | ppm | 2535 | 2548 | 3207 | 3455 | 2362 | 2771 |
| Si | ppm | 88.3 | 118.6 | 103.7 | 153.1 | 85.6 | 102.3 |
| Fe | ppm | 23.44 | 31.01 | 2.6 | 4.97 | 4.34 | 8.11 |
| Mn | ppm | 15.9 | 20.24 | 15.4 | 15.44 | 20.02 | 14.93 |

The results in Table 1 show an increase in the pH of the plant leaves after priming with the method of the present invention. The results also show an elevated EC in plants primed with the method according to the invention. Thus, the higher EC-values suggest an increased electrolyte concentration in the plants. An increase of trace elements could also be detected, which might result from enhanced influx due to stromata opening. These findings show a clear priming effect of the present invention.

### Example 3:

In order to study the protective effect of the aqueous composition when applied on plants in more detail, the effects of the composition on leaf surface temperature were measured. To do this, ten Zweigelt grapevines grafted on 5BB rootstock were used. The experiment was performed by the University of Natural Resources and Life Sciences in Tulln, Lower Austria. 5 kg particles/ha, as defined in Example 1 (composition 1), were applied to half of the shoots in each plant (n=5 shoots per plant) at the concentration of 25 g/L, while the rest of the canopy remained untreated. Before and after the imposition of radiation, leaf temperature was measured using a laser IR thermometer (UniversalTemp, Bosch).

The results depicted in Fig. 2 show that primed plants exhibit significantly cooler leaves (-5°C) compared to control after direct sunlight radiation. The results indicate the protective potential of plant leaves against abiotic stress factors when treated with the method of the present invention.

### Example 4:

The aqueous composition, as defined in Example 1, was applied on potato cultures (Concordia seed potato, 50000 plants per ha) with a backpack sprayer at a concentration of 300 l/ha (i.e. 4 kg particles/ha) and biotic stress factors were determined. Before use, the aqueous composition was dissolved in water in three different concentrations (2%, 5%, 10%). The preparations were applied five times with a time interval of about 12 days, starting at stage 23 on the BBCH scale. The parameters of the plants were measured according to standard DIN CEN/TS 17700-3:2022.

The results in Table 2 show the overall productivity of the vegetative mass of potatoes after priming the plants with the method according to the invention. In particular, the determined plant height, number of stems, leaf area and leaf dry weight and the potato yield suggest positive effects on the plants when treated according to the invention. Furthermore, the results in Table 2 exhibit elevated resistance to damage by potato beetles and potato late blight caused by *Phytophthora infestans* compared to untreated control. The damage (%) of the plants correlates to the quotient of the damaged plants by pests and the total number of evaluated plants.

Hence, the present invention protects plants against biotic factors such as diseases and pests while improving the overall (physiological) condition of the treated plant that contributes to a higher yield a better quality of the plant.

**Table 2: Effect of the present invention on the resistance of potatoes to pests.**

| **Indicators** | **Control** | **2%** | **5%** | **10%** |
|---|---|---|---|---|
| Plant height [cm] | 58.9 | 60.1 | 66.4 | 67.1 |
| Number of stems [pcs./plant] | 3.7 | 4.1 | 6.4 | 6.7 |
| Leaf area [cm²] | 98.6 | 102.3 | 118.6 | 120.1 |
| Leaf dry weight [g/plant] | 62.8 | 64.4 | 78.2 | 79.5 |
| Yield [t/ha] | 34.9 | 35.8 | 42.1 | 42.3 |
| Potato beetle [% damage] | 39.7 | 37.4 | 25.6 | 24.9 |
| *Phytophthora infestans* [% damage] | 55.4 | 53.8 | 37.4 | 36.8 |

### Example 5:

To evaluate the efficacy of the method of the present invention under stress conditions on *Vitis vinifera L.* in more detail, the following particles VAR 1 to 5 were used to prepare aqueous compositions to be applied on the aforementioned plants:
*VAR 1:* approx. 80 wt % clinoptilolite; D98: 10 pm; D50: 4 pm, pH 9.6.
*VAR 2:* approx. 80 wt % clinoptilolite; D98: 24 pm; D50: 6 pm, pH 9.1.
*VAR 3:* approx. 65 wt % chabazite; D98: 37 pm; D50: 8.1 µm; pH 6.9 - 7.1.
*VAR 4:* 95 wt % Kaolin; D98: <12 pm, D50: 3 µm; pH 4.5 - 7.5.
*VAR 5:* ca. 80 wt % clinoptilolite; D98: 42.3 pm; D50: - 11.4 µm; pH 9.0 - 9.5.

4 kg particles/ha of VAR 1 to VAR 5 dispersed in 150-400 L water were applied to the plants in the course of each treatment. In addition thereto some plants (the control group) remained untreated. Three applications on the plants per season were conducted; wherein the 1^{st} application was in BBCH 71 to 75, the 2^{nd} application was in BBCH 77 to 79 and the 3^{rd} application was in BBCH 81 to 89. Spraying was done with a field sprayer at intervals of approx. 14 days or after rain. The influence of the treatment of plants with the compositions VAR 1 to 5 on leaf surface temperature and leaf chlorophyll content was measured. The leaf surface temperature was measured using a laser IR thermometer (UniversalTemp, Bosch) after 14 days after application. The chlorophyll content of the leaves was determined by a chlorophyll content-Meter (Konika Minolta SPAD-502 Plus). The chlorophyll content was measured as described by Süß et al. (2015): Measuring Leaf Chlorophyll Content with the Konica Minolta SPAD-502Plus - Theory, Measurement, Problems, Interpretation. EnMAP Field Guides Technical Report, GFZ Data Services, doi http://doi.org/10.2312/enmap.2015.010. The leaf chlorophyll content is expressed as Soil Plant Analysis Development (SPAD) value, which is proportional to the amount of chlorophyll present by measuring the absorbance of the leaf on two wavelength regions (400-500 nm and 600-700 nm). The SPAD value can range between 0 and 100, wherein a high SPAD value indicates a high leave chlorophyll content. Statistical analysis was performed using a Tukey-test.

The results in Table 3 reveal a significantly lower leaf surface temperature of plants primed with the aqueous compositions VAR 1 and VAR 2 according to the present invention than VAR 3, VAR 4, VAR 5 and the untreated control. Also, plants treated with aqueous compositions VAR 1 and VAR 2 showed a significant increase in leaf chlorophyll content in comparison to control and the other compositions VAR 3 to VAR 5.

Further parameters such as leaf color (visual assessment, coverage in %), damage of sunburn, leaf nutrient analysis, and leaf spectrometry parameters were also measured. The results clearly show that the stress management of the plants, as reflected in the above parameters, was increased significantly in plants primed with the compositions VAR 1 and 2 compared to the untreated control group and the plants treated with VAR 3, VAR 4 and VAR 5.

**Table 3: Leaf surface temperature and fruit surface temperature after priming with aqueous compositions VAR 1 to VAR 5.**

| | **Leaf surface temperature [°C]** | **Leaf chlorophyll content [SPAD value]** |
|---|---|---|
| Untreated control | 37.83 | 45.21 |
| VAR 1 | 33.46 | 46.01 |
| VAR 2 | 33.06 | 45.71 |
| VAR 3 | 34.26 | 44.55 |
| VAR 4 | 34.91 | 45.54 |
| VAR 5 | 35.71 | 45.21 |

### Example 6:

The particles VAR 1, VAR 4, and VAR 5 were used to prepare aqueous compositions to be applied on *Vitis vinifera L,* as described in example 5. The influence of the method of present invention on leaf surface temperature, fruit surface temperature was analyzed at day 7 post-treatment. The leaf temperature and fruit temperature were measured using a laser IR thermometer (UniversalTemp, Bosch). Statistical analysis was performed using a Tukey-test.

The results in Table 4 show a significant difference in leaf surface temperature and fruit surface temperature in plants primed with the compositions VAR 1 compared to the untreated control and the plants treated with VAR 4 and VAR 5.

**Table 4: Impact of the present invention on leaf surface temperature and fruit surface temperature content.**

| | **Leaf surface temperature [°C]** | **Fruit surface temperature [°C]** |
|---|---|---|
| Untreated control | 31.91 | 25.85 |
| VAR 1 | 30.13 | 25.32 |
| VAR 4 | 31.33 | 26.50 |
| VAR 5 | 31.14 | 26.53 |

## Claims

1. A method of priming a plant against biotic and/or abiotic stress factors comprising the step of treating said plant or parts thereof with an aqueous composition comprising particles comprising at least one zeolite, wherein the particles have a particle size D98 of less than 30 µm and at least 50 wt % of the dry solids of the aqueous composition consist of the at least one zeolite.

2. The method of claim 1, wherein the particles have an average size D98 from 0.1 to 25 pm, preferably from 0.2 to 20 pm, more preferably from 0.2 to 15 pm, more preferably from 0.5 to 12 pm, more preferably from 1 to 10 pm, more preferably from 2 to 8 µm.

3. The method of claim 1 or 2, wherein the particles have an average size D50 of less than 5 pm, preferably from 0.1 to 5 pm, more preferably from 0.5 to 5 pm, more preferably from 1 to 5 pm, more preferably from 1 to 4 µm.

4. The method of any one of claims 1 to 3, wherein the aqueous composition comprises 0.1 to 10 wt %, preferably 0.1 to 8 wt %, more preferably 0.1 to 5 wt %, more preferably 0.5 to 5 wt %, more preferably 1 to 5 wt %, of said particles having a preferred size of 30 to 100 pm, preferably of 30 to 70 µm.

5. The method of any one of claims 1 to 4, wherein the particles have a maximum size of 90 pm, more preferably of 65 µm.

6. The method of any one of claims 1 to 5, wherein at least 60 wt %, preferably at least 70 wt %, more preferably at least 80 wt %, of the dry solids of the aqueous composition consist of the at least one zeolite.

7. The method of any one of claims 1 to 6, wherein the at least one zeolite has a silica to alumina ratio of at least 4.

8. Method according to any one of claims 1 to 7, wherein the at least one zeolite is selected from the group consisting of clinoptilolites and mordenite.

9. Method according to any one of claims 1 to 8, wherein the particles comprise at least two, preferably at least three, zeolites.

10. Method according to any one of claims 1 to 9, wherein the particles comprise at least 40 wt %, preferably at least 50 wt %, more preferably at least 60 wt %, of the at least one zeolite, preferably 40 to 95 wt %, more preferably 50 to 90 wt %, more preferably 60 to 90 wt %, of the at least one zeolite.

11. The method according to any one of claims 1 to 10, wherein the particles comprise at least one further zeolite or wherein the aqueous composition comprises further particles comprising at least one further zeolite preferably having a silica to alumina ratio of 4 or less.

12. Method according to any one of claims 1 to 11, wherein the aqueous composition comprises 0.1 to 20 wt %, preferably 0.2 to 15 wt %, more preferably 0.5 to 10 wt %, more preferably 2 to 8 wt %, of said particles.

13. Method according to any one of claims 1 to 12, wherein the plant is a crop producing plant, preferably a fruit or vegetable producing plant, more preferably selected from the group consisting of a berry bush, a pome fruit tree and potato plant.

14. Use of a composition as defined in any one of claims 1 to 12 as a plant protecting agent, fertilizer or biostimulant.

15. Product obtainable by harvesting crops from a plant treated with a method according to any one of claims 1 to 13, wherein the crops are optionally fermented.
